# EUROPEAN PATENT APPLICATION

(11) **EP 4 597 218 A1**
(43) Date of publication of application: **06.08.2025**
(21) Application number: 23873048.5
(22) Date of filing: 25.09.2023
(51) Int. Cl.: G03B 13/36, G03B 3/10, G03B 30/00, G03B 17/12, H04N 23/55, H04N 23/54, H04N 23/57, B60R 11/04

(54) **CAMERA FOR VEHICLE AND VEHICLE**

(30) Priority: 30.09.2022 KR 20220125809
(71) Applicant: LG INNOTEK CO. LTD, Gangseo-gu Seoul 07796 (KR)
(72) Inventor: LEE, Min Woo, Seoul 07796 (KR)
(74) Representative: Plasseraud IP
(86) International application number: PCT/KR2023/014716
(87) International publication number: WO 2024/071933

(57) **Abstract**

This camera for a vehicle comprises: a first body; a second body coupled to the first body; an actuator arranged inside the first body and the second body; a lens module coupled to the actuator; and a substrate assembly including an image sensor arranged to face the lens module, wherein the actuator comprises: a bobbin to which the lens module is coupled; a first driving unit arranged on the outer surface of the bobbin; and a second driving unit arranged on the outside of the first driving unit.

## Description

### [Technical Field]

The present embodiment relates to a camera for vehicle and a vehicle.

### [Background Art]

Recently, ultra-small camera modules have been developed and are widely used in small electronic products such as smartphones, laptops, and game consoles.

As automobiles become more popular, ultra-small cameras are widely used in vehicles as well as in small electronic products. For example, black box cameras for vehicle protection or objective data on traffic accidents, rear surveillance cameras that allow drivers to monitor the blind spots at the rear of the vehicle through a screen to ensure safety when reversing, and surrounding detection cameras that can monitor the surroundings of the vehicle are provided.

The camera may be provided with a lens, a lens holder that accommodates the lens, an image sensor that converts an image of a subject photographed by the lens into an electric signal, and a printed circuit board on which the image sensor is mounted. The housing forming the outer appearance of the camera is formed with a structure in which the entire area is sealed to prevent internal components from being contaminated by foreign substances containing moisture.

For camera for vehicles, there is a problem of image quality degradation due to changes in the focal distance between the lens and the image sensor under various environmental conditions.

### [Detailed Description of the Invention]

### [Technical Subject]

The present embodiment is intended to provide a camera module for a vehicle and a vehicle in which an auto focusing (AF) function is implemented.

### [Technical Solution]

In the present embodiment, a camera for vehicle comprises: a first body; a second body being coupled to the first body; an actuator arranged inside the first body and the second body; a lens module being coupled to the actuator; and a substrate assembly including an image sensor being arranged to face the lens module, wherein the actuator comprises: a bobbin to which the lens module is coupled; a first driving unit being arranged on an outer surface of the bobbin; and a second driving unit being arranged on an outside of the first driving unit.

The actuator includes a cover can for accommodating the bobbin, and the cover can may be integrally formed with the first body by insert injection.

The material of the cover can is metal, and the material of the first body may be plastic.

The substrate assembly includes a first substrate being arranged with the image sensor on an upper surface thereof, and may include an adhesive member being arranged between the first substrate and the actuator.

The adhesive member may include epoxy.

The first driving unit includes a coil, and the second driving unit may include a magnet.

The lens module can be screw-coupled to the bobbin.

A first protruded portion being protruded downward is arranged on a lower surface of the first body, a second protruded portion being protruded upward is arranged on an upper surface of the second body, and the first protruded portion and the second protruded portion can be fusion-bonded.

A groove having a shape being recessed upward more than other regions is arranged on a lower surface of the first body, the groove includes an inclined surface having a shape that becomes closer to the actuator as it goes inward, and one region of the second protruded portion can be arranged within the groove.

According to another embodiment, a camera for vehicle comprises: a first body; a second body being coupled with the first body; an actuator being arranged inside the first body and the second body; a lens module being coupled with the actuator; a substrate assembly including an image sensor being arranged facing the lens module; and a glass being arranged on the first body, wherein the actuator comprises a cover can accommodating a bobbin, and wherein the cover can and the first body are formed to be in direct contact with each other.

### [Advantageous Effects]

Through the present embodiment, in an external environment where a camera for vehicle is installed, changes in resolution due to temperature changes and changes in target position due to vehicle movement are corresponded through the AF function of the actuator, so there is an advantage in obtaining high-quality photographs.

In addition, since the body forming the outer shape of the camera for vehicle module and the actuator are integrally formed by insert injection, there is an advantage in that the actuator within the body can be firmly fixed.

### [Brief Description of Drawings]

FIG. 1 is a perspective view of a vehicle according to an embodiment of the present invention.
FIG. 2 is a perspective view illustrating the outer appearance of a camera for vehicle according to an embodiment of the present invention.
FIG. 3 is a drawing illustrating a glass in FIG. 2 in an exploded form.
FIG. 4 is a plan view illustrating a side surface of a camera for vehicle according to an embodiment of the present invention.
FIG. 5 is a cross-sectional view of a camera for vehicle according to an embodiment of the present invention.
FIG. 6 is an exploded perspective view of a camera for vehicle according to an embodiment of the present invention.
FIG. 7 is an exploded perspective view of an actuator according to an embodiment of the present invention.
FIG. 8 is a drawing illustrating a modified embodiment of an actuator according to an embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

The 'optical axis direction' used hereinafter is defined as an optical axis direction of the lens. Meanwhile, the 'optical axis direction' can correspond to an 'up-down direction', a 'z-axis direction', and the like.

The 'auto focus function' used hereinafter is defined as a function that automatically focuses on a subject by adjusting the distance from an image sensor by moving the lens module in an optical axis direction according to the distance of the subject so that a clear image of the subject can be obtained on an image sensor. Meanwhile, 'auto focus' can be used interchangeably with 'auto focus (AF)'.

The 'shaking hand correction function' used hereinafter is defined as a function that moves or tilts the lens module in a direction perpendicular to the optical axis to offset vibration (movement) caused to the image sensor by external force. Meanwhile, 'shaking hand correction' can be used interchangeably with 'optical image stabilization (OIS)'.

Hereinafter, the present invention will be described in more detail with reference to the attached drawings.

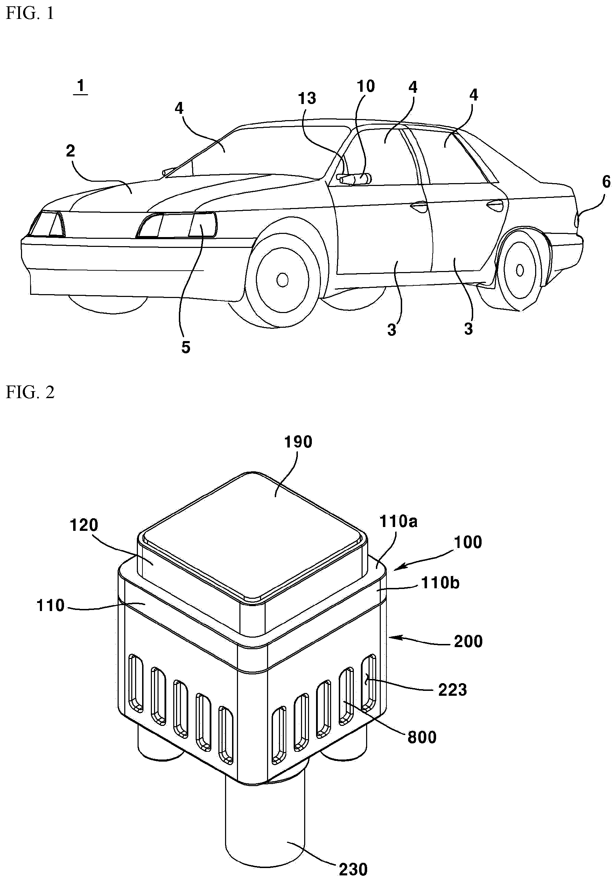

FIG. 1 is a perspective view of a vehicle according to an embodiment of the present invention.

Referring to FIG. 1, a vehicle **1)** according to an embodiment of the present invention may include a body **2,** a door **3,** glass **4,** a headlamp **5, a** tail lamp 6, and a camera for vehicle **10.**

The above body **2** may be an exterior member of the vehicle **1.** The body **2** may have various forms, such as a frame type and a monocoque type. One or more doors **3** may be coupled to a side surface of the body **2.** In addition, the glass **4** may be coupled to the front and rear a portion where a pillar is formed of the upper portion of the body **2** and the door **3.** The headlamp **5** may be mounted on the front of the lower portion of the body **2.** The tail lamp **6** may be mounted on the rear of the lower portion of the body **2.**

A camera for vehicle **10** may be installed on a side portion of the body **2** or on a door arranged at the front of one or more of the doors **3.** The camera for vehicle **10** may be installed in front of the glass **4** coupled to the door **3.** That is, the side mirror in the vehicle **1** of the present embodiment may be rearranged with the camera for vehicle **10.**

The above camera for vehicle **10** can photograph images of the rear of both sides of the vehicle. Images photographed by the camera for vehicle **10** can be electrically connected to a display unit (not shown) through an electronic control unit (ECU), and the like. Accordingly, images photographed by the camera for vehicle **10** can be controlled by the electronic control unit (ECU) and played back on the display unit.

An interior space for a driver can be formed inside the body **2.** A display unit can be installed inside the body **2.** The display unit can output an image photographed by the camera for vehicle **10.** The display unit can be installed on a dashboard (not shown) inside the body **2.**

The installation form of the camera for vehicle **10** in the vehicle **1** described above is exemplary, and the camera for vehicle **10** can be used for one or more among a front camera, a side camera, a rear camera, and a black box of the vehicle **1.**

Hereinafter, a camera for vehicle module according to a present embodiment is described with reference to drawings.

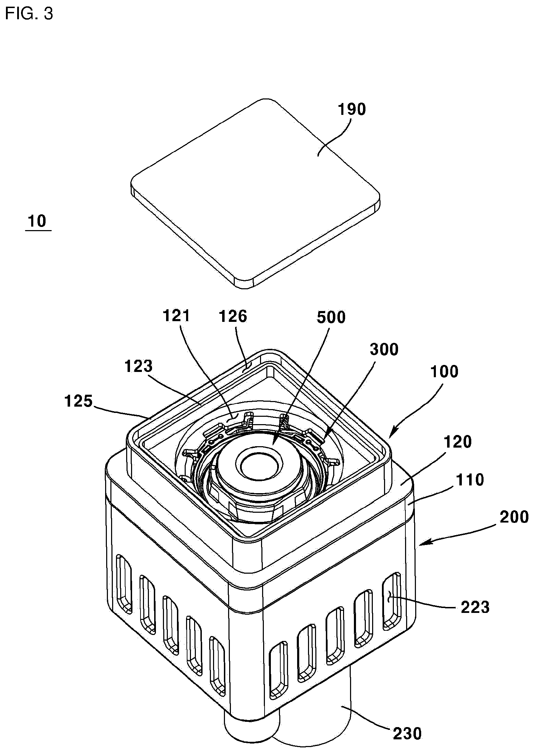

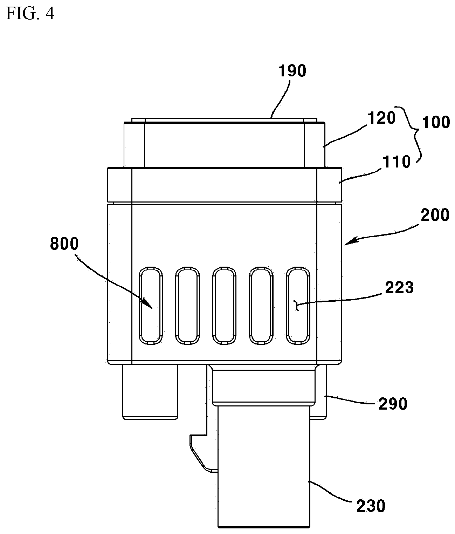

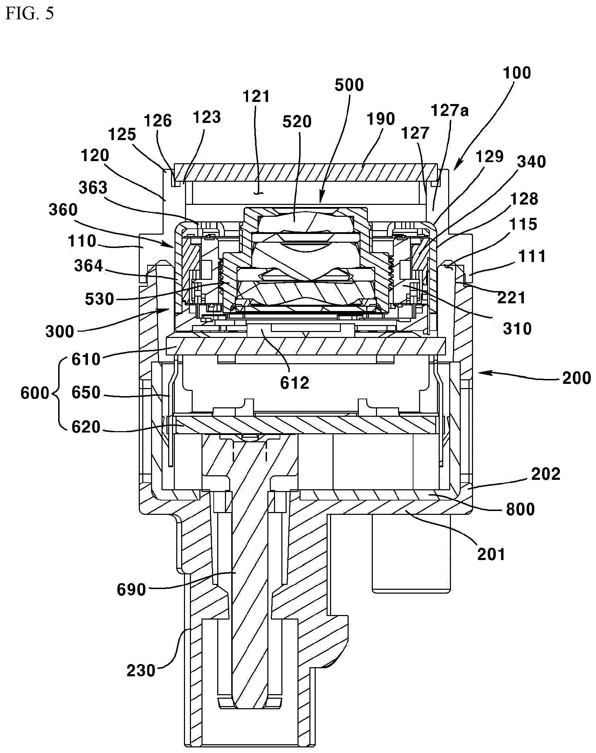

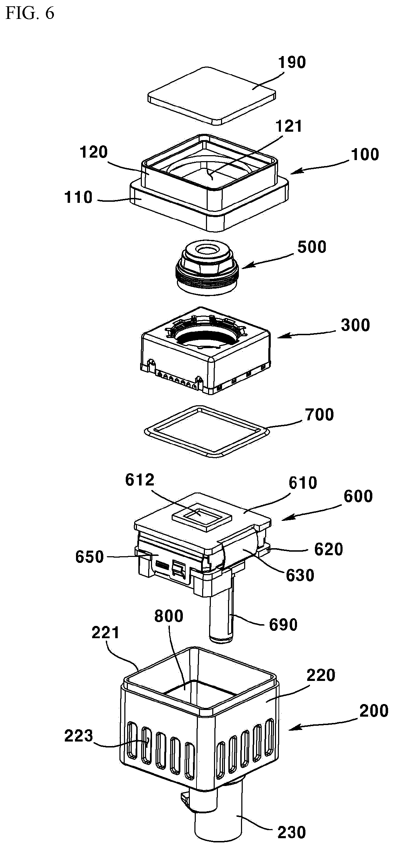

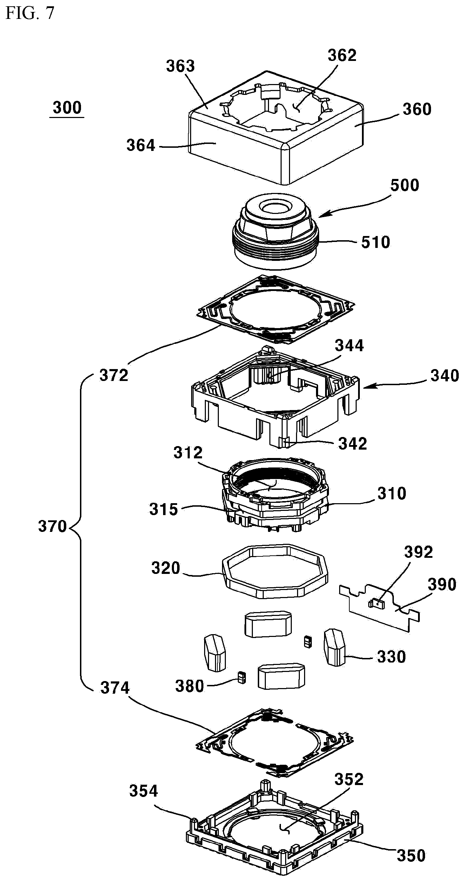

FIG. 2 is a perspective view illustrating the outer appearance of a camera for vehicle according to an embodiment of the present invention; FIG. 3 is a drawing illustrating a glass in FIG. 2 in an exploded form; FIG. 4 is a plan view illustrating a side surface of a camera for vehicle according to an embodiment of the present invention; FIG. 5 is a cross-sectional view of a camera for vehicle according to an embodiment of the present invention; FIG. 6 is an exploded perspective view of a camera for vehicle according to an embodiment of the present invention; and FIG. **7** is an exploded perspective view of an actuator according to an embodiment of the present invention.

Referring to FIGS. 2 to 7, the camera for vehicle module may include a first body **100.** The first body **100** may be referred to as one among a front body, an upper housing, and a first housing. The first body **100** may include a first region **110.** The first body **100** may include a second region **120.** The first region **110** and the second region **120** of the first body **100** may be formed integrally. As a modified embodiment, the first region **110** and the second region **120** may be formed separately.

The first region **110** may be coupled to the second region **120.** The first region **110** may be formed integrally with the second region **120.** The first region **110** may be formed of a plastic material. The first region **110** may be arranged on a second body **200,** which will be described later. The first region **110** may be coupled to the second body **200.** The lower end of the first region **110** may be fixed to the second body **200.** The first region **110** may be coupled to the second body **200** by any one among ultrasonic welding, laser welding, and thermal welding. As a modified embodiment, the first region **110** may be coupled to the second body **200** by an adhesive.

The first region **110** may be formed in a rectangular shape with an open lower portion. The corners of the first region **110** may be formed to be rounded. The first region **110** may include an upper plate 110a and a side plate **110b** being extended downward from the upper plate **110a.** The upper plate **110a** may be formed in a rectangular shape. The upper plate **110a** may be extended outward from a lower end outer circumferential surface of the second region **120.** The side plate **110b** may be extended downward from the outer edge of the upper plate **110a.** The side plate **110b** may be provided in plural. The side plate **110b** may include four side plates. The side plate 110b may be formed in a square plate shape. The side plate **110b** may include a first side plate, a second side plate, a third side plate being arranged at an opposite side of the first side plate, and a fourth side plate being arranged at an opposite side of the second side plate. The side plate **110b** may include first to fourth corners being arranged between the first to fourth side plates, respectively. Each of the first to fourth corners may include a round shape at least in portion.

The first region **110** may include a first protruded portion **111** (see FIG. 5). The first protruded portion **111** may be protruded downward from a lower surface of the side plate **110b.** The first protruded portion **111** may be coupled to the second body **200.** At least a portion of the first protruded portion **111** may be fusion-bonded to the second body **200.** At least a portion of the first protruded portion **111** may be coupled to the second body **200** by any one among ultrasonic fusion, laser fusion, and thermal fusion. As a modified embodiment, the first protruded portion **111** may be fixed to the second body **200** by an adhesive. Or, a portion of the first protruded portion **111** may be fusion-bonded to the second body **200,** and the remainder may be bonded using an adhesive. The region where the first protruded portion **111** and the second body **200** are bonded may be formed in a region being overlapped horizontally with the actuator **300,** which will be described later.

A groove **115** having a shape being recessed upward more than other regions may be formed on a lower surface of the first body **100.** The groove **115** may be formed on a lower surface of the first region **110.** The groove **115** may be arranged at an inner side of the first protruded portion **111.** As illustrated in FIG. 5, the groove **115** may include an inclined surface having a shape in which the distance from the actuator **300** becomes closer with respect to a direction perpendicular to the optical axis as it goes inward. Through the groove **115,** the coupling process between the first body **100** and the actuator **300,** which will be described later, may be more easily performed.

The first body **100** may include the second region **120.** The second region **120** may be formed of a plastic material. The second region **120** may be extended upward from an upper surface of the first region **110.** The second region **120** may be formed integrally with the first region **110.** As a modified embodiment, the second region **120** may be coupled to the first region **110.** In this case, the second region **120** may be fixed to the first region **110** by an adhesive. The second region **120** may accommodate glass **190** at an inside thereof.

The cross-sectional area of the second region **120** may be formed smaller than the cross-sectional area of the first region **110.**

A space **121** may be formed inside the first body **100.** At least a portion of a lens module **500** and an actuator **300,** which will be described later, may be accommodated in the space **121.** The space **121** may be opened upward and downward through holes formed on upper and lower surfaces of the first body **100,** respectively.

As illustrated in FIG. 5, the space **121** may include a first space being formed by the inner surface **128** of the first region **110** and a second space being formed by the inner surface **127** of the second region **120.** The cross-sectional area of the first space may be formed to be larger than the cross-sectional area of the second space. The first space and the second space may be connected to each other. The corner surface **129** connecting the inner surface **128** of the first region 110 and the inner surface **127** of the second region **120** may be formed to be round.

In other words, a protruded portion **127a** being protruded inwardly compared to other regions may be formed on the inner surface **128** of the space **121,** and it may be understood that the protruded portion **127a** is formed at an inner side of the second region **120.**

The glass **190** may be arranged on an upper surface of the first body **100.** The glass **190** is formed of a transparent material and may be arranged facing the lens module **500,** which will be described later, in an optical axis direction. Foreign substances may be prevented from entering the space **121** through the glass **190.**

A guide to which the glass **190** is coupled may be arranged on an upper surface of the first body **100.** The guide may include a first guide portion **125,** a second guide portion **123** being arranged at an inner side of the first guide portion **125,** and a guide groove **126** being arranged between the first guide portion **125** and the second guide portion **123.** The bottom surface of the guide groove **126** may be an upper surface of the second region **120.**

The first guide portion **125** may have a shape being protruded upward from an upper surface of the second region **120** more than the other regions. The inner surface of the first guide portion **125** may be arranged to be overlapped at least a portion of the side surface of the glass **190** in a direction perpendicular to the optical axis direction. The upper surface of the first guide portion **125** may be arranged higher than the upper surface of the second guide portion **123.** The upper surface of the glass 190 may be arranged higher than the upper surface of the first guide portion **125.**

The second guide portion **123** may have a shape being protruded upward from an upper surface of the second region **120** more than the other regions. The upper surface of the second guide portion **123** may support the lower surface of the glass **190.** The upper surface of the second guide portion **123** may be in contact with a lower surface of the glass **190.**

The guide groove **126** may be arranged between the first guide portion **125** and the second guide portion **123.** When viewed from above, the guide groove **126** may have a groove shape. At least a portion of the guide groove **126** may be covered by the glass **190.** An adhesive for bonding with the glass **190** may be arranged in the guide groove **126.**

The vehicle camera **10** may include a second body **200.** The second body **200** may be referred to as one among a rear body, a lower housing, and a second housing. The second body **200** may be formed in a rectangular shape with an open upper portion. The second body **200** may be formed of a plastic material. The second body **200** may be arranged below the first body **100.** The second body **200** may be coupled to the first body **100.** The second body **200** may be fusion-bonded to the first body **100.** The second body **200** may be coupled to the first body **100** by one among ultrasonic fusion, laser fusion, and thermal fusion. At this time, ultrasonic fusion may mean a process in which the fusion portions of the second body **200** and the first body **100** are fused and integrated by vibrating the first body **100** while applying pressure while the second body **200** is fixed. The second body **200** may form an internal space through coupling with the first body **100.**

The second body **200** may include a bottom plate **201.** The bottom plate **201** may face the upper plate **110a** of the first region **110** of the first body **100.** The bottom plate **201** may be spaced apart from the upper plate **110a** of the first region **110** of the first body **100** in an optical axis direction. The bottom plate **201** may be parallel to the upper plate **110a** of the first region **110** of the first body **100.** The bottom plate **201** may be formed in a square shape. At this time, at least a portion of the corner of the bottom plate **201** may include a round shape.

The bottom plate **201** may include a hole through which a connector **690,** which will be described later, penetrates. A connector extraction portion **230** may be arranged in the hole. The connector extraction portion **230** may penetrate through the hole. A bottom plate of a shield can **800,** which will be described later, may be arranged in the bottom plate **201.** The bottom plate of the shield can **800** may be in surface contact with the bottom plate **201.** The bottom plate of the shield can **800** may be coupled to the bottom plate **201** by insert injection.

The second body **200** may include the side plate **202.** The side plate **202** may be extended from the bottom plate **201.** The side plate **202** may be extended from an outer edge of the bottom plate **201.** The shield can **800** may be arranged in the side plate **202.** The shield can **800** may be in surface contact with an inner surface of the side plate **202.** The side plate of the shield can **800** may be coupled to the side plate **202** by insert injection. The upper end of the side plate **202** may be coupled to the first body **100.** The outer side surface of the side plate **202** may be arranged on the same plane as the outer side surface of the side plate **110b** of the first body **100.**

The side plate **202** may include: a first region in which a hole **223** is formed; and a second region being extended from the first region and in which the hole **223** is not formed. The first region of the side plate **202** may be attached to the shield can **800.** The second region of the side plate **202** may not be attached to the shield can **800.** The inner side surface of the side plate **202** may include a step structure being formed by the first region and the second region. The inner side surface of the first region of the side plate **202** may be arranged outside the inner side surface of the second region of the side plate **202.** The inner side surface of the second region of the side plate **202** may be protruded inwardly from the inner side surface of the first region of the side plate **202.**

The side plate of the shield can **800** may be arranged in a first region of the side plate **202.** A side plate of the shield can **800** may be attached to a first region of the side plate **202.** The side plate of the shield can **800** may be attached to a first region of the side plate **202** by direct contact. The coating layer of the shield can **800** may be attached to a first region of the side plate **202.** The side plate **202** may include a first side plate, a second side plate, a third side plate being arranged at an opposite side of the first side plate, and a fourth side plate being arranged at an opposite side of the second side plate. The side plate may include a first corner being arranged between the first side plate and the second side plate, a second corner being arranged between the second side plate and the third side plate, a third corner being arranged between the third side plate and the fourth side plate, and a fourth corner being arranged between the fourth side plate and the first side plate. The first to fourth corners of the side plate may include a round shape.

The side plate **202** may include a second protruded portion **221.** The second protruded portion **221** may be protruded upwardly from an upper surface of the side plate **202.** The second protruded portion **221** may be protruded upwardly from an upper surface of the side plate **202.** The second protruded portion **221** may be in contact with the first protruded portion **111** of the first body **100.** The second protruded portion **221** may be arranged to be overlapped with the first protruded portion **111** in a direction perpendicular to an optical axis direction. The second protruded portion **221** may be arranged at an inner side of the first protruded portion **111.** In this case, the outer side surface of the second protruded portion **221** may be arranged to face the inner side surface of the first protruded portion **111.** The outer side surface of the second protruded portion **221** may be in contact with the inner side surface of the first protruded portion **111.** At this time, the second protruded portion **221** may be arranged to be spaced apart from the actuator **300,** which will be described later. That is, an air gap may be formed between the second protruded portion **221** and the actuator **300.** Since the air gap has a function of blocking heat, when the first protruded portion **111** and the second protruded portion **221** are fused or external heat is transmitted toward the actuator **300** through the air gap, thereby minimizing damage and axis change due to heat.

The second protruded portion **221** can be coupled with at least a portion of the first protruded portion **111** of the first body **100.** The second protruded portion **221** can be fusion-welded with at least a portion of the first protruded portion **111.** At this time, the fusion-welding may mean any one among ultrasonic fusion, laser fusion, and thermal fusion. When the first protruded portion **111** and the second protruded portion **221** are fusion-welded through laser fusion, the laser must be transmitted to fuse the inner surface of the first protruded portion **111** and the outer surface of the second protruded portion **221,** so the thickness of the first protruded portion **111** may be smaller than the thickness of the second protruded portion **221.**

An outer region of the second protruded portion **221** of the upper surface of the side plate **202** may have a groove shape.

The side plate **202** may include a hole **223.** The side plate **202** may be formed with the hole **223.** The hole **223** may be formed by penetrating the outer side surface and the inner side surface of the side plate **202.** The shield can **800** may be exposed to the outside through the hole **223.** The hole **223** may expose at least a portion of the side plate of the shield can **800** to the outside. The holes **223** may be provided in multiple numbers and arranged to be spaced apart from each other.

The second body **200** may include a connector withdrawal portion **230.** The connector withdrawal portion **230** may be coupled to the bottom plate **201.** The connector withdrawal portion **230** may be arranged in a hole of the bottom plate **201.** A connector 690 may be arranged inside the connector withdrawal portion **230.** The connector withdrawal portion **230** may be formed of a plastic material.

The camera module for vehicle may include a shield can **800.** The shield can **800** may be formed of a metal material. The shield can **800** may include a bottom plate, side plates being extended from the bottom plate, and corners being arranged on a plurality of side plates. The bottom plate, side plates, and corners may be formed integrally.

The bottom plate of the shield can **800** may be in contact with the bottom plate **201** of the second body **200.** The side plate of the shield can **800** may be in contact with the side plate **202** of the second body **200.** The corner of the shield can **800** may be in contact with the corner of the second body **200.** A hole may be formed in the bottom plate of the shield can **800** so that the connector **690** may penetrate through it.

The shield can **800** can be coupled with the second body **200** to be waterproof. Depending on the intended use, the waterproofing can satisfy a waterproof/dustproofing grade of IP52 or higher and can satisfy an IP69K grade when arranged outside a vehicle.

The shield can **800** can be formed integrally through metal forming. That is, the bottom plate, side plate, and corner of the shield can **800** can be formed integrally through metal forming.

The shield can **800** may be fixed to the second body **200** through insert molding. The shield can **800** may be fixed to the second body **200** through insert molding. Insert injection or insert molding may refer to a molding method of integrating a metal member and a plastic member. A portion of the second body **200** may be melted by heat generated during the insert injection process and may be introduced into the pores **S** generated during the pretreatment process of the shield can **800.**

The vehicle camera module may include a substrate assembly **600.** The substrate assembly **600** may be arranged within the second body **200.** The substrate assembly **600** may be arranged in an internal space formed by the coupling of the first body **100** and the second body **300.** At least a portion of the substrate assembly **600** may be arranged within the shield can **800.**

The substrate assembly **600** may include a first substrate **610.** The first substrate **610** may include a printed circuit board. The first substrate **610** may include a rigid printed circuit board. An image sensor **612** may be arranged in the first substrate **610.** At this time, the first substrate **610** may be referred to as a sensor substrate. The first substrate **610** may include a first surface facing the first body **100** and a second surface being arranged at an opposite side of the first surface. The image sensor **612** may be arranged on the first surface of the first substrate **610.** The first substrate **610** may be coupled with an actuator **300,** which will be described later. The first substrate **610** can be coupled to an actuator **300** through an adhesive member **700.**

The substrate assembly **600** may include a second substrate **620.** The second substrate **620** may include a printed circuit board. The second substrate **620** may include a rigid printed circuit board. The second substrate **620** may be arranged below the first substrate **610.** The second substrate **620** may be spaced apart from the first substrate **610.** The second substrate **620** may be spaced apart from the first substrate **610** in an optical axis direction. The second substrate **620** may supply power to the first substrate **610.** The second substrate **620** may be arranged parallel to the first substrate **610.** The second substrate **620** may be electrically connected to the connector **690.** The second substrate **620** may include a first surface facing the first substrate **610** and a second surface being arranged at an opposite side of the first surface. The connector **690** may be arranged in a second surface of the second substrate **620.**

The substrate assembly **600** may include a third substrate **630.** The third substrate **630** may include a flexible printed circuit board (FPCB). The third substrate **630** may electrically connect the first substrate **610** and the second substrate **620.** One end of the third substrate **630** may be connected to the first substrate **610,** and the other end of the third substrate **630** may be connected to the second substrate **620.** The third substrate **630** may have elasticity.

The substrate assembly **600** may include a spacer **650.** The spacer **650** may be referred to as an electromagnetic shielding member. The spacer **650** may block electromagnetic interference (EMI) or electromagnetic waves. The spacer **650** may perform a function of spacing apart between the pluralities of substrates. The spacer **650** may be formed of a metal material.

The spacer **650** may include a protrusion and a hole for supporting the first substrate **610** or the second substrate **620.** A protrusion being coupled to the hole of the spacer **650** may be formed on a side surface of the first substrate **610** or a side surface of the second substrate **620.** The protrusion of the spacer **650** may support a surface of the first substrate **610** or a surface of the second substrate **620.**

The spacer **650** may be arranged inside the shield can **800.** The spacer **650** may be spaced apart from the shield can **800.** The spacer **650** may be spaced apart from the bottom plate of the shield can **800** in an optical axis direction. The spacer **650** may be spaced apart from the side plate of the shield can **800** in a direction perpendicular to the optical axis direction. The spacer **650** may be formed of a metal material. The thickness of the spacer **650** may be thinner than the thickness of the side plate of the shield can **800.** The spacer **650** may face the side plate of the shield can **800.**

The substrate assembly **600** may include a connector **690.** The connector **690** may be arranged on a second surface of the second substrate **620.** The connector **690** may be fixed to a second surface of the second substrate **620.** The connector **690** may be electrically connected to the second substrate **620.**

The vehicle camera module may include a lens module **500.** At least a portion of the lens module **500** may be coupled to the actuator **300.** At least a portion of the lens module **500** may be protruded more upward than an upper surface of the actuator **300.** The lens module **500** may include a lens barrel **530** (see FIG. 4) and at least one lens **520** being disposed within the lens barrel **530.**

Inside the lens barrel **530, a** space whose upper surface and lower surfaces are opened is included, and the lens **520** can be arranged in the space. A first screw portion **510** can be formed on an outer circumferential surface of the lens barrel **530.** The first screw portion **510** includes a screw thread or a screw groove, and the lens barrel **530** can be screw-coupled to the actuator **300** through the first screw portion **510.**

The lens **520** may be arranged within the lens barrel **530.** The lens **520** may be provided in multiple numbers and arranged along an optical axis direction. The lens **520** may be aligned with the image sensor **612.** The lens **520** may be arranged to face the image sensor **612** in an optical axis direction. The lens **520** may be arranged to face the glass **190** in an optical axis direction. The lens **520** may be moved in an optical axis direction by the actuator **300.**

The vehicle camera module may include an actuator **300.** The actuator **300** may be an auto focusing (AF) actuator that applies a voice coil motor to move the lens module **500** in an optical axis direction, but is not limited thereto, and an embodiment may be applied to an optical image stabilization (OIS) type, unlike the one illustrated.

As illustrated in FIG. 7, the actuator **300** may include a bobbin **310,** a coil **320,** a magnet **330,** a housing **340,** a cover can **360,** a base **350,** and an elastic member **370.** In addition, the actuator **300** may further include a position sensor **392,** a circuit board **390,** and a sensing magnet **380** for AF feedback driving.

The bobbin **310** is formed in a cylindrical shape with open upper and lower surfaces, and a hollow space **312** may be formed in the center of the bobbin **310** to which the lens module **500** is coupled. A screw thread or screw groove may be formed on an inner surface of the hollow space **312** so that the lens barrel **530** may be screw-coupled through the first screw portion **510.** Accordingly, the lens module **500** may be screw-coupled to the bobbin **310.**

A coil coupling portion **315** to which the coil **320** is coupled is formed on an outer circumferential surface of the bobbin **310,** and the coil coupling portion **315** may have a groove shape being recessed inward from an outer circumferential surface of the bobbin **310.**

The coil **320** may be arranged on an outer surface of the bobbin **310.** The coil **320** may be coupled to the coil coupling portion **315.** The coil **320** may have a ring-shaped cross-section. The coil **320** may be electrically connected to the substrate assembly **600.** The coil **320** may be electrically connected to the first substrate **610.** The coil **320** may be referred to as a first driving unit.

The housing **340** may be arranged at an outside of the bobbin 310. The housing **340** may have a hexahedral shape with open upper and lower surfaces. A coupling groove **342** having a shape being recessed upward more than other regions may be formed on a lower surface of the housing **340.** The coupling groove **342** may be formed on an outer surface of the four corner regions of the housing **340.** The housing **340** may be coupled to the base **350** through the coupling groove **342.**

A magnet coupling portion **344** to which the magnet **330** is coupled may be formed on an inner surface of the housing **340.** The magnet coupling portion **344** may be formed in a corner region of the inner surface of the housing **340.** The magnet coupling portion **344** may have a groove shape. The magnet coupling portions 344 may be provided in multiple numbers and arranged to be spaced apart from one another.

The magnet **330** may be arranged at an outside of the coil **320.** The magnet **330** may be coupled to the housing **340.** The magnet **330** may be coupled to the magnet coupling portion **344.** The magnet **330** is provided in four pieces, and the four magnets **330** may be respectively arranged in corner regions on an inner surface of the housing **340.** Therefore, by the electromagnetic interaction between the coil **320** and the magnet **330,** the bobbin **310** may move in an optical axis direction together with the lens module **500.** The magnet **330** may be referred to as a second driving unit.

Meanwhile, in the present embodiment, the first driving unit is a coil and the second driving unit is a magnet, but this is not limited to the present invention, and a magnet may be arranged on an outer surface of the bobbin 310 and a coil may be arranged facing the magnet of the housing **340.**

The base **350** can support a lower surface of the housing **340.** The base **350** can be arranged below the housing **340** and the bobbin **310.** The base **350** can include a hole **352** so that the lens module **500** is exposed downward. The lens module **500** can be arranged to face the image sensor **612** through the hole **352.**

The base **350** may have a rectangular cross-sectional shape. A protrusion **354** may be formed on an upper surface of the base **350** facing the coupling groove **342** of the housing **340.** The protrusion **354** may have a shape being protruded more upward from an upper surface of the base **350** than other regions. The protrusion **354** may be respectively arranged at the corner regions of the base **350.** When the base **350** and the housing **340** are coupled, the protrusions **354** may be coupled to the coupling groove **342.**

The elastic member **370** can elastically support the movement of the bobbin **310.** The elastic member **370** can include an upper elastic member **372** being coupled to an upper surface of the bobbin **310** and the housing **340,** and a lower elastic member **374** being coupled to a lower surface of the bobbin **310** and the housing **340.**

The upper elastic member **372** may include an inner elastic portion being coupled to an upper surface of the bobbin **310,** an outer elastic portion being coupled to an upper surface of the housing **340,** and a connecting elastic part connecting the inner elastic portion and the outer elastic portion. A protrusion for coupling with an upper elastic member **372** may be formed on an upper surface of the bobbin **310** or an upper surface of the housing **340.**

The lower elastic member **374** may include an inner elastic portion being coupled to a lower surface of the bobbin **310,** an outer elastic portion being coupled to a lower surface of the housing **340,** and a connecting elastic portion connecting an inner elastic portion and an outer elastic portion. A protrusion for coupling with the lower elastic member **374** may be formed on a lower surface of the bobbin **310** or the lower surface of the housing **340.**

The cover can **360** may be arranged at an outside of the housing **340.** The cover can **360** may be formed of a non-magnetic metal material. The cover can 360 may be formed in a box shape having an open bottom and including an upper plate **363** and a side plate **364.** A hole **362** may be formed in an upper plate **363** of the cover can **360** so that the lens **500** may penetrate through it. A corner region connecting the upper plate **363** and the side plate **364** may be formed to be round. The housing **340,** the bobbin **310,** and at least a portion of the lens module **500** may be arranged within the cover can **360.** A space in which components within the actuator **300** can be accommodated can be formed by coupling the cover can **360** and the base **350.** A lower end of the cover can **360** can be coupled with the base **350.**

The sensing magnet **380** may be arranged on an outer surface of the bobbin **310.** A groove-shaped coupling region may be formed on an outer surface of the bobbin **310** so that the sensing magnet **380** may be coupled. The sensing magnet **380** may be provided in multiple numbers and may be arranged to face one another about the hollow **312** of the bobbin **310.**

The circuit board **390** may be arranged on an inner surface of the housing **340** or an inner surface of the cover can **360.** The circuit board **390** may be electrically connected to the board assembly **600.** A position sensor **392** may be arranged on a surface of the circuit board **390** facing the sensing magnet **380.** Accordingly, the position sensor **392** may detect the magnetic field of the sensing magnet **380** being changed due to movement of the bobbin **310,** thereby detecting the position of the bobbin **310.** The actuator **300** arranged to adjust the optical axis of the lens **520** may be driven by detecting the temperature through a temperature sensor (not shown) separately arranged in the substrate **390** and driving the actuator **300,** or a temperature sensor (not shown) may be arranged on some substrates in the substrate assembly **600** to detect the temperature to drive the actuator **300.** Or, the actuator **300** may be driven by including a function for adjusting the resolution in the image sensor **610.**

The actuator **300** and the substrate assembly **600** may be coupled to each other through an adhesive member **700.** The adhesive member **700** may include epoxy. The adhesive member **700** may be disposed between the lower surface of the actuator **300** and the upper surface of the first substrate **610.** The adhesive member **700** may be disposed between a lower surface of the base **350** and an upper surface of the first substrate **610.** By adjusting the thickness of the adhesive member **700,** the distance between the image sensor **612** and the lens **520** within the lens module **500** may be adjusted. That is, the active alignment (AA) distance for lens focusing may be adjusted.

Meanwhile, the actuator **300** may be formed integrally with the first body **100** by insert molding. The cover can **360** of the actuator **300** may be coupled with the first body **100** by insert molding. Accordingly, since the cover can **360** made of metal and the first body **100** made of plastic are coupled as one body, there is an advantage in that the actuator **300** may be firmly fixed within the first body **100.** That is, since the lens module **500** is arranged inside the actuator **300,** axial alignment may be a problem when the actuator **300** and the first body **100** are coupled. To prevent this, the cover can **360** of the actuator **300** can be fixed as one body by insert-molding the first body **100,** thereby reducing the points of axial alignment and facilitating axial alignment. At this time, a portion of the protruded portion **127a** of the first body **100** can be arranged on an upper surface of the cover can **360.**

When the actuator **300** and the first body **100** are coupled, the side plate **364** of the cover can **360** can be coupled to the inner surface **128 of** the space **121** within the first body **100.** The upper plate **363** of the cover can **360** can be coupled to a lower surface of the protruded portion **127a** of the space **121** within the first body **100.** The corner region connecting the side plate **364** and the upper plate **363** of the cover can **360** can be coupled to a corner surface **129** connecting the inner surface of the protruded portion **127a** and the inner surface of the space **121.**

The cover can **360** and the first body **100** can be coupled to be waterproof. To this end, the surface of the cover can **360** being coupled with the first body **100** can be surface treated.

According to the structure described above, in the external environment where the vehicle camera is installed, changes in resolution due to temperature changes and changes in target position due to movement of the vehicle are corresponded through the AF function of the actuator, so there is an advantage in obtaining high-quality photographs.

In addition, since the body forming the outer shape of the vehicle camera module and the actuator are integrally formed by insert injection, there is an advantage in that the actuator within the body can be firmly fixed.

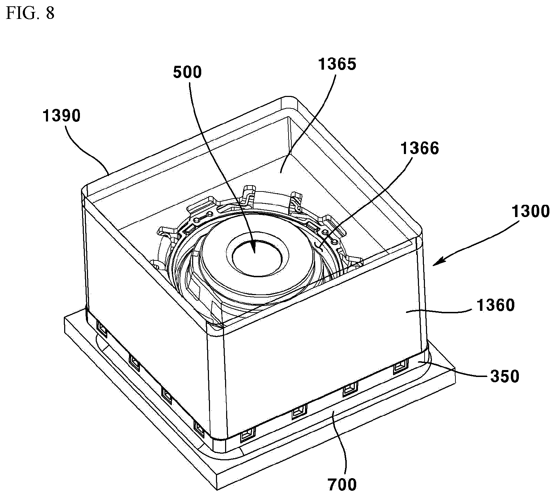

FIG. 8 is a drawing illustrating a modified embodiment of an actuator according to an embodiment of the present invention.

In the present modified embodiment, there is a difference in the coupling region of the glass from the above-described embodiment. Therefore, components having the same structure and function will be described by assigning the same drawing reference numerals.

Referring to FIG. 8, the glass **1390** may be modified embodiment on the actuator **1300.** The glass **1390** may be arranged on an upper surface of the cover can **1360.** In this case, the lens module **500** may be accommodated in a space within the cover can **1360.**

In the space inside the cover can **1360,** a cover plate **1365** being protruded inwardly from an inner surface of a side plate forming a side surface of the cover can **1360** may be arranged. A hole **1366** may be formed in the center of the cover plate **1365** so that the lens module **500** may penetrate therethrough. The lens module **500** may be arranged, at least partially, to be protruded upwardly from the cover plate **1365** by penetrating through the hole **1366.**

Accordingly, the actuator **1300** can be integrally coupled to an inner surface **128** of the space **111** in the first body **100** see FIG. 4 by insert injection. The side plate of the cover can **1360** of the actuator **1300** can be integrally coupled to an inner surface **128** by insert injection. Therefore, in the present modified embodiment, the protruded portion **127** of the space **111** in the first body **100** of the above-described embodiment can be omitted.

According to the above structure, there is an advantage in that external foreign substances can be prevented from being introduced into the space within the actuator **1300** through the glass **1390.**

Meanwhile, an infrared blocking film for infrared blocking may be attached to a surface of the glass **1390,** or an infrared blocking agent may be applied.

Although the embodiments of the present invention have been described with reference to the attached drawings, those skilled in the art will understand that the present invention can be implemented in other specific forms without changing the technical idea or essential features thereof. Therefore, it should be understood that the embodiments described above are exemplary in all respects and not restrictive.

## Claims

1. A camera module comprising:
a first body;
a second body coupled to the first body;
an actuator arranged inside the first body and the second body;
a lens module coupled to the actuator; and
a substrate assembly including an image sensor arranged to face the lens module,
wherein the actuator comprises:
a bobbin to which the lens module is coupled;
a first driving unit arranged on an outer surface of the bobbin; and
a second driving unit arranged on an outside of the first driving unit.

2. The camera module according to claim 1,
wherein the actuator includes a cover can for accommodating the bobbin, and wherein the cover can is integrally formed with the first body by insert injection.

3. The camera module according to claim 2,
wherein a material of the cover can is metal, and a material of the first body is plastic.

4. The camera module according to claim 1,
wherein the substrate assembly includes a first substrate arranged with the image sensor on an upper surface thereof, and
wherein an adhesive member arranged between the first substrate and the actuator is included.

5. The camera module according to claim 4,
wherein the adhesive member includes epoxy.

6. The camera module according to claim 1,
wherein the first driving unit includes a coil, and
wherein the second driving unit includes a magnet.

7. The camera module according to claim 1,
wherein the lens module is screw-coupled to the bobbin.

8. The camera module according to claim 1,
wherein a first protruded portion protruded downward is arranged on a lower surface of the first body,
wherein a second protruded portion protruded upward is arranged on an upper surface of the second body, and
wherein the first protruded portion and the second protruded portion are fusion-bonded.

9. The camera module according to claim 8,
wherein a groove having a shape recessed upward more than other regions is arranged on a lower surface of the first body,
wherein the groove includes an inclined surface having a shape that becomes closer to the actuator as it goes inward, and
wherein one region of the second protruded portion is arranged within the groove.

10. A camera module comprising:
a first body;
a second body coupled with the first body;
an actuator arranged inside the first body and the second body;
a lens module coupled with the actuator;
a substrate assembly including an image sensor arranged facing the lens module; and
a glass arranged on the first body,
wherein the actuator comprises a cover can accommodating a bobbin, and
wherein the cover can and the first body are formed to be in direct contact with each other.
